# EUROPÄISCHE PATENTSCHRIFT

(11) **EP 0 529 232 B1**
(45) Veröffentlichungstag und Bekanntmachung des Hinweises auf die Patenterteilung: **20.12.1995**
(21) Anmeldenummer: 92110708.2
(22) Anmeldetag: 25.06.1992
(51) Int. Cl.: B29C 45/17

(54) **Gasinjektionsbaustein für das Gasinnendruckspritzen**
Gas injection unit for the internal gas pressure injection moulding
Unité d'injection de gaz pour le moulage par injection à pression de gaz interne

(30) Priorität: 29.08.1991 CH 2536/91
(43) Veröffentlichungstag der Anmeldung: 03.03.1993
(73) Patentinhaber: Schoeller-Plast AG, 1680 Romont (CH)
(72) Erfinder: Umiker, Hans, CH-8132 Egg (CH)
(74) Vertreter: EGLI-EUROPEAN PATENT ATTORNEYS

(56) Entgegenhaltungen:
- EP-A- 0 385 175
- EP-A- 0 405 663
- EP-A- 0 448 283
- EP-A- 0 485 726
- WO-A-90/06220
- US-A- 4 164 523
- US-A- 4 740 150
- PATENT ABSTRACTS OF JAPAN vol. 004, no. 125 (M-030) 3. September 1980 & JP-A-55 082 626 (ASAHI CHEM. IND. CO.)
- PATENT ABSTRACTS OF JAPAN vol. 13, no. 305 (M-849)(3653) 13. Juli 1989 & JP-A-01 095 007 (HONDA MOTOR)
- PATENT ABSTRACTS OF JAPAN vol. 9, no. 121 (M-382)(1844) 25. Mai 1985 & JP-A-60 008 029 (ICHIKO KOGYO)

## Beschreibung

Die Erfindung betrifft einen Gasinjektionsbaustein für das Gasinndruckspritzen, insbesondere das druckkontrollierte Gasinnendruckspritzen (Airmould-Verfahren).

Es ist mehr und mehr üblich, beim Kunststoffspritzgiessen Teile grösseren Querschnitts wie Verstärkungsrippen, Griffe u. dgl. nicht massiv zu spritzen, sondern sie durch Injektion von Gas während des Spritzvorgangs hohl auszubilden. Dadurch wird neben Material- und Gewichtsersparnis auch eine raschere Abkühlung und damit eine Verkürzung der Zykluszeit erreicht. Ausserdem kann das beim Spritzen massiver Teile oft auftretende Problem der Schwindung entschärft werden.

Das Gas, z. B. Stickstoff, wird mittels Gasinjektionsbausteinen in die Form gepresst, welche mit einer Kunststoffeinspritzdüse integriert oder auch isoliert an Stellen der Spritzgussform angesetzt sein können, an welchen Hohlräume erzeugt werden sollen. Dabei ist es bekannt, im Kanal eines Gasinjektionsbausteins, durch welchen das Gas zugeführt wird, einen porösen Verschlussstopfen z. B. aus Sintermetall, der für das Gas hinreichend durchlässig ist, aber ein Eindringen von Spritzgussmasse in den Zuführkanal verhindert, anzuordnen.

Aus der EP-A-0 405 663 ist insbesondere ein gattungsgemässer Gasinjektionsbaustein bekannt, der als Bestandteil eines kombinierten Einspritzbausteins ein düsenartig in ein enges Rohr auslaufendes, offenbar rundes, weit vorstehendes Klemmteil aufweist, welches allenfalls nach Zerlegung des Einspritzbausteins mittels Zangen oder ähnlichen Klemmwerkzeugen aus dem Zuführkanal herausgeschraubt werden kann.

Der Verschlussstopfen ist dadurch nicht leicht entfernbar, sondern erst nach aufwendiger Zerlegung des Einspritzbausteins und durch die Bauweise nicht unterstütztes Abschrauben des Klemmteils zugänglich. Er liegt ausserdem weit hinter der Mündung des Gasinjektionsbausteins.

Gemäss der JP-A-55 082 626 wird der Verschlussstopfen mittels einer auf ein Rohr aufgeschraubten Kappe geklemmt gegen die Stirnfläche des letzteren geklemmt. Rohr und Kappe sind von einer weiteren Hülse umgeben.

Diese Befestigungsart ist verhältnismässig aufwendig und erlaubt es ebenfalls nicht ohne weiteres, den Verschlussstopfen vom Hohlraum der Spritzgussform her auszuwechseln. Auch hier liegt der Verschlussstopfen verhältnismässig weit hinter der Mündung des Zuführkanals.

Gemäss EP-A-0 385 175 ist eine vorspringende Kappe aus gesintertem Stahl vorgesehen, die mit dem den Zuführkanal bildenden Rohr verschweisst ist. Wegen der Sprödigkeit des Sintermetalls kann die vorstehende Kappe jedoch leicht beschädigt werden und ist zudem im Fall eines Defekts schwer auszuwechseln.

Hier soll die Erfindung Abhilfe schaffen. Die Erfindung, wie sie in den Ansprüchen gekennzeichnet ist, schafft einen Gasinjektionsbaustein mit einem Verschlussstopfen, der vom Hohlraum der Spritzgussform her zugänglich und z. B. im Fall eines Defekts leicht auswechselbar ist.

Der erfindungsgemässe Gasinjektionsbaustein ist auch äusserst einfach aufgebaut und daher leicht herzustellen, dauerhaft und praktisch wartungsfrei. Der Verschlussstopfen kann knapp hinter der Mündung des Zuführkanals angeordnet sein.

Im folgenden wird die Erfindung anhand von nur Ausführungsbeispiele darstellenden Zeichnungen näher erläutert. Es zeigen
- Fig. 1: ein erste Ausführung eines erfindungsgemässen Gasinjektionsbausteins im Längsschnitt,
- Fig. 2: eine zweite Ausführung eines erfindungsgemässen Gasinjektionsbausteins im Längsschnitt und
- Fig. 3: vergrössert einen Querschnitt längs III - III in Fig. 2.

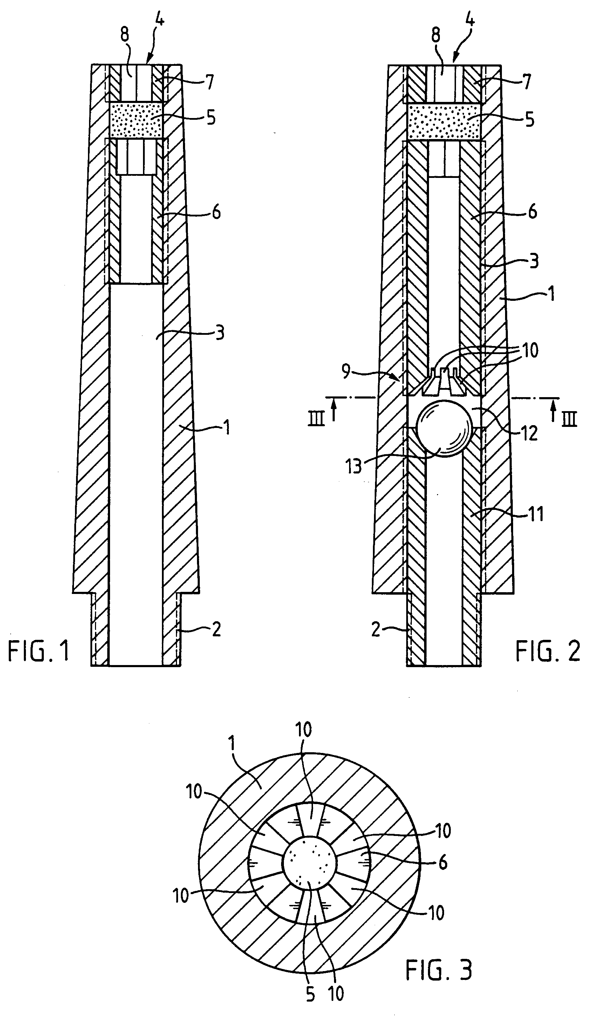

Der Gasinjektionsbaustein nach Fig. 1 weist ein längliches, rotationssymmetrisches, leicht konisches Gehäuse 1 mit einem seiner Befestigung dienenden Gewindefortsatz 2 auf, durch welches in Längsrichtung ein Zuführkanal 3 geführt ist, welcher in einer Injektionsmündung 4 endet.

Im Zuführkanal 3 weist er einen als zylindrisches Sintermetallplättchen ausgebildeten Verschlussstopfen 5 auf, welcher zwischen eine der Injektionsmündung 4 zugewandte Stirnfläche eines Rohrstücks 6 als Widerlager und einem als Madenschraube ausgebildeten Klemmteil 7 festgeklemmt ist. Der Verschlussstopfen 5 liegt unmittelbar hinter der Injektionsmündung 4 und ist von derselben nur um die Dicke des Klemmteils 7 abgesetzt. Das Rohrstück 6 ist in den Zuführkanal 3 eingeschraubt. Es weist an seinem dem Verschlussstopfen 5 zugewandten Ende einen Abschnitt auf, an welchem seine Innenwand sechskantig ausgebildet ist, sodass er zwecks leichterer Montage und Entfernung als Inbusschlüsselsitz dienen kann.

Aehnlich weist auch das Klemmteil 7 eine sechskantige zentrale Oeffnung 8 auf, welche als Inbusschlüsselsitz dienen kann und ein rasches Entfernen und Montieren desselben und Auswechseln des Verschlussstopfens 5 erlaubt.

Beim Spritzgiessen wird nun nach Beginn der Kunststoffeinspritzung durch den Zuführkanal 3, das Rohrstück 6, den gasdurchlässigen Verschlussstopfen 5 und die Oeffnung 8 im Klemmteil 7 z. B. Stickstoff unter einem Blasdruck von beispielsweise 80 at während 2,5 sec in die Form eingeblasen, dann der Druck auf einen Haltedruck von beispielsweise 50 at reduziert, einige Sekunden lang gehalten und dann langsam entspannt. Die Ableitung von Gas zur Druckreduzierung kann durch den Gasinjektionsbaustein erfolgen.

Nach dem Ende der Gasinjektion kann es sehr leicht zu einem Eindringen von Spritzgussmasse in die Injektionsmündung 4 kommen. Da jedoch der Verschlussstopfen 5 für Materialien höherer Viskosität undurchdringlich ist, kann es höchstens zur Bildung eines kleinen, die Oeffnung 8 des Klemmteils 7 ausfüllenden Pfropfens kommen, der jedoch unschädlich ist und beim nächsten Blasvorgang durch den Gasstrom weggeschleudert wird. Durch geringfügige Aenderung der Montage des Verschlussstopfens 5 könnte Pfropfenbildung falls nötig auch völlig verhindert werden.

Der Verschlussstopfen 5 könnte statt aus Sintermetall etwa auch aus einer keramischen Masse bestehen. Entscheidend ist, dass er aus festem und zugleich porösem Material besteht, wobei die Porengrösse in einem Bereich liegen muss, bei welchem der Durchgang des Gases nur wenig behindert wird, jedoch ein Eindringen der relativ hochviskosen Spritzgussmasse ausgeschlossen ist. Vor allem verschiedene Sintermetallplättchen, beispielsweise die von der Firma Pressmetall Krebsöge GmbH, Postfach 1250, D-5608 Radevormwald unter dem Produktnamen SIKA-R15 angebotenen, haben sich sehr gut bewährt.

Die Ausführung nach Fig. 2 und 3 ist weitgehend gleichartig aufgebaut wie die eben beschriebene, weist jedoch ein hinter dem Verschlussstopfen 5 angeordnetes Kugelrückschlagventil 9 auf, welches die Druckbelastung desselben nach der Blasphase reduziert. Die von der Injektionsmündung 4 wegweisende Stirnfläche des Rohrstücks 6 ist invers konisch ausgebildet und weist mehrere radiale Nuten 10 auf. Demselben mit Abstand gegenüberliegend ist ein zweites Rohrstück 11 ebenfalls in den Zuführkanal 3 eingeschraubt, dessen gegen das erstgenannte Rohrstück 6 weisende Stirnfläche ebenfalls invers konisch ausgebildet ist, jedoch keine Nuten aufweist, während es am entgegengesetzten Ende den Gewindefortsatz 2 bildet. In einer zwischen den beiden Rohrstücken 6 und 11 gebildeten Ventilkammer 12 ist eine Kugel 13 angeordnet, deren Durchmesser etwas geringer ist als die lichte Weite des Zuführkanals 3.

Strömt nun Gas durch den Zuführkanal 3 zur Injektionsmündung 4, so wird die Kugel 13 gegen die Stirnfläche des Rohrstücks 6 gepresst, sodass Gasströmung seitlich an der Kugel 13 vorbei und durch die Nuten 10 möglich ist. Bei Gasströmung in umgekehrter Richtung wird dagegen die Kugel 13, wie in Fig. 2 dargestellt, gegen die Stirnfläche des Rohrstücks 11 gepresst, auf der sie satt aufliegt, sodas sie dort den Zuführkanal 3 verschliesst und weitere Gasströmung unterbunden ist.

Das Kugelrückschlagventil 9 entlastet, wie gesagt, den Verschlussstopfen 5, verunmöglicht aber ein Abziehen von Gas durch den Gasinjektionsbaustein.

Gasinjektionsbausteine der beschriebenen Art können an verschiedenen Stellen der Spritzgussform eingesetzt werden, unabhängig von der Kunststoffeinspritzdüse.

## Patentansprüche

1. Gasinjektionsbaustein für das Gasinnendruckspritzen, mit einem Gehäuse (1), durch welches ein in einer Injektionsmündung (4) endender Zuführkanal (3) zur Zuführung von Gas geführt ist, der durch einen Verschlussstopfen (5) aus porösem Material verschlossen ist, durch welchen der Durchgang des Gases nur wenig behindert, jedoch ein Eindringen von Spritzgussmasse verhindert wird und der zwischen ein im Zuführkanal (3) angeordnetes Auflager und ein von der Injektionsmündung (4) her in den Zuführkanal (3) einschraubbares Klemmteil (7) mit durchgehender Oeffnung (8) geklemmt ist, **dadurch gekennzeichnet**, **dass** die Oeffnung (8) als Inbusschlüsselsitz ausgebildet ist.

2. Gasinjektionsbaustein nach Anspruch 1, **dadurch gekennzeichnet, dass** der Verschlussstopfen (5) unmittelbar hinter der Injektionsmündung (4) angeordnet ist.

3. Gasinjektionsbaustein nach Anspruch 1 oder 2, **dadurch gekennzeichnet, dass** das Klemmteil (7) vollständig vom Zuführkanal (3) aufgenommen wird.

4. Gasinjektionsbaustein nach einem der Ansprüche 1 bis 3, **dadurch gekennzeichnet, dass** das Auflager durch eine Stirnfläche eines in den Zuführkanal (3) eingeschraubten Rohrstücks (6) gebildet wird.

5. Gasinjektionsbaustein nach Anspruch 4, **dadurch gekennzeichnet, dass** mindestens ein an den Verschlussstopfen (5) anschliessender Abschnitt des Rohrstücks (6) als Inbusschlüsselsitz ausgebildet ist.

6. Gasinjektionsbaustein nach einem der Ansprüche 1 bis 5, **dadurch gekennzeichnet, dass** der Verschlussstopfen (5) die Form eines Plättchens hat.

7. Gasinjektionsbaustein nach einem der Ansprüche 1 bis 6, **dadurch gekennzeichnet, dass** der Verschlussstopfen (5) aus Sintermetall besteht.

8. Gasinjektionsbaustein nach einem der Ansprüche 1 bis 7, **dadurch gekennzeichnet, dass** hinter dem Verschlussstopfen (5) in den Zuführkanal (3) ein Rückschlagventil eingebaut ist.

9. Gasinjektionsbaustein nach Anspruch 8, **dadurch gekennzeichnet, dass** das Rückschlagventil als Kugelrückschlagventil (9) ausgebildet ist.

## Claims

1. Gas injection unit for internal gas-pressure injection moulding, having a housing (1), through which there passes a feed channel (3), for feeding gas, which ends in an injection mouth (4) and is closed by a closure plug (5) of porous material, by which the passage of the gas is hindered only a little but which prevents any penetration of injection-moulding compound and is clamped between a support, arranged in the feed channel (3), and a clamping part (7) which can be screwed into the feed channel (3) from the injection mouth (4) and has a through-opening (8), **characterized in that** the opening (8) is designed as allan wrench seat.

2. Gas injection unit according to Claim 1, **characterized in that** the closure plug (5) is arranged directly behind the injection mouth (4).

3. Gas injection unit according to Claim 1 or 2, **characterized in that** the clamping part (7) is completely accommodated by the feed channel (3).

4. Gas injection unit according to one of Claims 1 to 3, **characterized in that** the support is formed by an end face of a pipe piece (6) screwed into the feed channel (3).

5. Gas injection unit according to Claim 4, **characterized in that** at least one section of the pipe piece (6), adjoining the closure plug (5), is designed as a allan wrench seat.

6. Gas injection unit according to one of Claims 1 to 5, **characterized in that** the closure plug (5) has the form of a platelet.

7. Gas injection unit according to one of Claims 1 to 6, **characterized in that** the closure plug (5) consists of sintered metal.

8. Gas injection unit according to one of Claims 1 to 7, **characterized in that** a check valve is fitted into the feed channel (3) behind the closure plug (5).

9. Gas injection unit according to Claim 8, **characterized in that** the check valve is designed as a ball check valve (9).

## Revendications

1. Elément d'injection de gaz pour le moulage par injection sous pression interne de gaz, comprenant un logement (1) à travers lequel est guidé un canal d'alimentation (3) pour l'alimentation du gaz, se terminant dans un orifice d'injection (4), le canal étant fermé par un bouchon de fermeture (5) en une matière poreuse, à travers lequel le passage du gaz n'est perturbé que de manière minime, tout en empêchant une introduction de la matière de moulage par injection, et qui est serré entre un support disposé dans le canal d'alimentation (3) et un élément de serrage (7) qui peut être vissé à partir de l'orifice d'injection (4) dans le canal d'alimentation (3), muni d'une ouverture traversante (8), caractérisé en ce que l'ouverture (8) est réalisée en forme de logement pour une clé à écrous pour vis à empreinte.

2. Elément d'injection de gaz selon la revendication 1, caractérisé en ce que le bouchon de fermeture (5) est disposé immédiatement derrière l'orifice d'injection (4).

3. Elément d'injection de gaz selon la revendication 1 ou 2, caractérisé en ce que l'élément de serrage (7) est complètement logé dans le canal d'alimentation (3).

4. Elément d'injection de gaz selon l'une quelconque des revendications 1 à 3, caractérisé en ce que le support est formé par une face frontale d'un élément tubulaire (6) vissé dans le canal d'alimentation (3).

5. Elément d'injection de gaz selon la revendication 4, caractérisé en ce qu'au moins une section de l'élément tubulaire (6) se raccordant au bouchon de fermeture (5) est réalisée en forme de logement pour une clé à écrous pour vis à empreinte.

6. Elément d'injection de gaz selon l'une quelconque des revendications 1 à 5, caractérisé en ce que le bouchon de fermeture (5) a la forme d'une plaquette.

7. Elément d'injection de gaz selon l'une quelconque des revendications 1 à 6, caractérisé en ce que le bouchon de fermeture (5) est constitué de métal crasses.

8. Elément d'injection de gaz selon l'une quelconque des revendications 1 à 7, caractérisé en ce qu'une soupape d'arrêt est insérée dans le canal d'alimentation (3) derrière le bouchon de fermeture (5).

9. Elément d'injection de gaz selon la revendication 8, caractérisé en ce que la soupape d'arrêt est réalisée en forme de soupape d'arrêt à boulet.
